# EUROPÄISCHE PATENTSCHRIFT

(11) **EP 1 719 660 B1**
(45) Veröffentlichungstag und Bekanntmachung des Hinweises auf die Patenterteilung: **25.11.2009**
(21) Anmeldenummer: 06007786.4
(22) Anmeldetag: 13.04.2006
(51) Int. Cl.: B60P 1/26

(54) **Fahrzeugbehälteranordnung mit einer schwenkbaren Behälterwand und Gelenkanordnung zwischen Behälterrahmen und Behälterwand**
Hinge arrangement for a tailboard
Ensemble d'articulation d'une ridelle

(30) Priorität: 07.05.2005 DE 102005021240
(43) Veröffentlichungstag der Anmeldung: 08.11.2006
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- EP-A- 0 411 984
- EP-A- 1 386 780
- DE-A1- 3 336 668
- FR-A1- 2 705 628

## Beschreibung

Die Erfindung betrifft eine Fahrzeugbehälteranordnung mit einer schwenkbaren Behälterwand.

Derartige Fahrzeugbehälteranordnungen mit um eine horizontale Schwenkachse schwenkbarer Behälterwand sind insbesondere kippbare Behälter mit pendelnd in einer Gelenkanordnung an einem Behälterrahmen eingehängter Heckklappe. Um beim Transport von feuchtem oder feinkörnigem Schüttgut ein Austreten von Schüttgut zu vermeiden, ist ein möglichst geringer Spalt zwischen der Behälterwand und der durch diese verschlossenen Behälteröffnung wesentlich. Zugleich soll aber auch gewährleistet sein, dass die Behälterwand beim Kippvorgang des Behälters zuverlässig pendelnd öffnet.

Für die hierfür genaue Ausrichtung der Behälterwand bezüglich der Behälteröffnung ist es bekannt, die Gelenkanordnung rahmenseitig an einem Trägerkörper anzuordnen, welcher an dem Rahmen befestigt ist, wobei die Position des Trägerkörpers und damit auch die durch diesen gegebene Position der Schwenkachse relativ zu dem Behälterrahmen in geringem Umfang verstellbar ist. Hierzu weist in bekannter Ausführung der Trägerkörper parallel zu der Schwenkachse eine horizontale und eine vertikale Fläche auf, welchen Flächen des Behälterrahmens gegenüberstehen. Mittels Stellschrauben können die Abstände der einander gegenüberstehenden Flächen variiert und eine optimale Position für die Schwenkachse eingestellt werden. Zur Stabilisierung werden Distanzbleche zwischen gegenüberstehende Flächen eingelegt.

Es sind ferner Fahrzeugbehälteranordnungen bekannt, bei welchen eine schwenkbare Heckklappe mittels hydraulischer Kraftmittel verschwenkbar und/oder auch nur entlang der Behälteröffnung vertikal verschiebbar ist, um die Heckklappe zwangsweise zu öffnen und/oder verschiedene Betriebsweisen beim Ausgeben von Schüttgut aus dem Behälter zu ermöglichen. Die EP 1386780 A1 zeigt eine Anordnung, bei welcher ein Schwenklager einer schwenkbaren Heckklappe an dem ausfahrbaren Teil einer Teleskopführung angebracht ist. Der ausfahrbare Teil ist innerhalb eines einen Teil des Behälterrahmens bildenden Führungsprofils angeordnet und mittels eines Hydraulikzylinders relativ zu dem Führungsprofil linear verschiebbar und in zwei verschiedenen Höhenpositionen fixierbar, wobei in einer oberen Höhenposition zwischen der Unterkante der nicht verschwenkten Heckklappe eine auf den unteren Abschnitt der Behälteröffnung beschränkte Teilöffnung freigegeben wird. Der Hydraulikzylinder dient auch dazu, über eine Hebelanordnung die Heckklappe um die Schwenkachse nach oben zu schwenken und die gesamte Behälteröffnung freizugeben. In der DE 3336668 A1 ist ein Kippmuldenfahrzeug mit einer hydraulisch schwenkbaren Heckklappe beschrieben, bei welcher gleichfalls eine vertikale Verschiebung und eine Verschwenkung vorgesehen sind, wobei mittels zweier am Kippaufbau befestigter Schwenkarme die Schwenkachse der Heckklappe nach oben verschwenkbar ist.

Der Erfindung liegt die Aufgabe zugrunde, eine vorteilhafte Fahrzeugbehälteranordnung mit einer schwenkbaren Behälterwand und eine Gelenkanordnung zwischen einem Behälterrahmen und einer Behälterwand anzugeben, insbesondere eine Fahrzeugbehälteranordnung mit verbesserter Möglichkeit zur Einstellung einer optimalen Position der Schwenkachse.

Erfindungsgemäße Lösung ist in dem unabhängigen Anspruch beschrieben. Die abhängigen Ansprüche enthalten vorteilhafte Ausgestaltungen und Weiterbildungen der Erfindung.

Die Verwendung wenigstens eines um eine erste Drehachse drehbaren ersten Stellglieds mit einer zu der ersten Drehachse exzentrisch verlaufenden Anlagefläche, über welche sich der Trägerkörper mit einer Gegenanlagefläche gegen den Behälterrahmen abstützt, ermöglicht auf besonders einfache und vorteilhafte Weise eine Veränderung der Position des Trägerkörpers relativ zu dem Halterahmen. Als bezüglich der Drehachse exzentrischer Verlauf sei a priori jeder nicht zur Drehachse konzentrische Verlauf mit drehwinkelabhängigem Abstand der Anlagefläche von der Drehachse verstanden, wodurch bei Drehung des Stellglieds eine vorzugsweise kontinuierliche Positionsveränderung des Trägerkörpers relativ zum Behälterrahmen erreicht werden kann. In bevorzugter Ausführung verläuft die Anlagefläche kreisförmig um einen gegen die Drehachse versetzten Mittelpunkt.

Unter der Befestigung am Behälterrahmen sei allgemein eine Befestigung ortsfest relativ zu dem als starr betrachteten Behälter angesehen, wobei auch fest mit Teilen des Behälterrahmens verbundene Zwischenelemente als Befestigungsbasis dienen können.

Vorzugsweise ist ein zweites um eine zweite Drehachse drehbares Stellglied mit einem zur zweiten Drehachse exzentrischen Verlauf einer zweiten Anlagefläche, über welche vorteilhafterweise wiederum der Trägerkörper gegen den Behälterrahmen abgestützt ist, als Teil der Justiereinrichtungen vorgesehen. Vorteilhafterweise ist die erste Drehachse und/oder die zweite Drehachse parallel zur Schwenkachse ausgerichtet.

Die Positionsveränderung des Trägerkörpers relativ zum Trägerkörper bei Betätigung der Justiereinrichtungen durch Drehen des ersten bzw. des zweiten Stellglieds um die jeweilige Drehachse erfolgt vorteilhafterweise senkrecht zur Schwenkachse unter paralleler Verschiebung der Schwenkachse. Der Trägerkörper ist hierfür vorteilhafterweise entlang einer quer, vorzugsweise senkrecht zur Schwenkachse verlaufenden Ebene an dem Rahmen geführt.

In besonders vorteilhafter Ausführungsform ist der Trägerkörper als eine metallische Platte ausgeführt, welche vorzugsweise im Bereich der Anlage an die Anlagefläche des ersten und/oder gegebenenfalls des zweiten Stellglieds im wesentlichen eben ausgeführt ist.

Die um die jeweilige Drehachse verdrehbaren Stellglieder sind vorteilhafterweise in verschiedenen, vorzugsweise kontinuierlich einstellbaren Drehpositionen festlegbar. Durch die Festlegung der Stellglieder in einer eingestellten Drehposition bleibt die Abstützung des Trägerkörpers über die Stellglieder erhalten. Vorteilhafterweise sind zusätzliche Mittel zur Festlegung des Trägerkörpers vorgesehen.

Die Drehachsen der beiden Stellglieder sind vorteilhafterweise bezüglich der Schwenkachse um einen Winkel von annähernd 90°, insbesondere zwischen 70° und 110° gegeneinander winkelversetzt angeordnet. Insbesondere ist vorteilhafterweise die Drehachse eines Stellglieds überwiegend vertikal und/oder die Drehachse des anderen Stellglieds überwiegend horizontal gegen die Schwenkachse versetzt angeordnet.

Das wenigstens eine erste Stellglied, vorzugsweise auch das zweite Stellglied, ist vorteilhafterweise drehbar im Behälterrahmen gelagert und in verschiedenen Darstellungen am Behälterrahmen festlegbar, insbesondere verschraubbar, wobei die Schraubenachse vorzugsweise mit der Drehachse zusammenfällt.

Die Stellglieder weisen zur Drehung vorteilhafterweise eine nicht rotationssymmetrische Struktur, beispielsweise eine Mehrkantstruktur, als Werkzeugansatz auf. Vorteilhafterweise ist eine Betätigung der Justiereinrichtungen bei eingehängter und in Schließstellung befindlicher Behälterwand möglich, ebenso eine Festlegung der Stellglieder oder ein Lösen einer solchen Festlegung zur Nachjustierung.

Vorteilhafterweise ist mit dem Trägerkörper ein Lagerbolzen als rahmenseitiger Teil der Schwenkgelenkanordnung verbunden, welcher mit einer Aussparung in einem Schwenkarm auf Seiten der Behälterwand ein Schwenklager bildet. Der Lagerbolzen kann in besonders vorteilhafter Ausführung durch den Trägerkörper hindurch bis zu dem Behälterrahmen reichen und zur Festlegung des Trägerkörpers am Behälterrahmen parallel und quer zur Schwenkachse dienen. Der Lagerbolzen kann hierfür insbesondere auf der dem Behälterrahmen zuweisenden Seite ein Schraubgewinde aufweisen. Der wandseitige Teil der Schwenkgelenkanordnung ist vorteilhafterweise als ein plattenförmiger Fortsatz von einer Seitenkante der Behälterwand ausgebildet, wobei die Schwenkachse horizontal und/oder vertikal gegen die obere Kante der Behälterwand von der Behälterwand weg beabstandet ist.

Besonders vorteilhaft ist eine Gelenkanordnung zur pendelnden Aufhängung einer Behälterwand, bei welcher ein Lagerbozen an dem Behälterrahmen einseitig eingespannt ist und abweichend von üblichen Behälterwand-Pendellagern mit behälterseitigen Lagergabeln das Lager behälterseitig und wandseitig jeweils nur einschalig (einschnittig) ausgebildet ist.

Der Lagerbolzen ragt in bevorzugter Ausführung mit einem freien Ende, welches vorteilhafterweise durch einen Bolzenkopf insbesondere mit Werkzeugansatz abgeschlossen ist, über den Trägerkörper hinaus und die Lagerfläche der Schwenkgelenkanordnung ist in axialer Richtung im Bereich des von dem Trägerkörper bis zum Bolzenkopf überstehenden Endes angeordnet. Die Lagerfläche kann in besonders vorteilhafter Ausführung durch den Bolzenschaft in dem freien Ende des Bolzens selbst gebildet sein. Der Bolzenschaft verläuft dabei vorteilhafterweise in axialer Richtung radial gestuft in der Weise, dass der Durchmesser in dem axialen Bereich zwischen Trägerkörper und Bolzenkopf größer ist als in dem in die Aussparung im Trägerkörper eingreifenden Teil des Bolzenschafts und der Bolzen sich mit der Stufe oder Bund am Rand der Aussparung des Trägerkörpers an diesem abstützt und axial gegen diesen verspannt ist. In anderer Ausführung kann auch eine Lagerhülse auf dem Bolzen aufgesteckt sein und die Lagerfläche bilden. Der Lagerbolzen ist in bevorzugter Ausführung als sogenannter Stufenbolzen oder Bundbolzen ausgebildet, welcher sich mit der Stufe bzw. dem Bund axial an dem Trägerkörper abstützt.

Die axiale Länge der Lagerfläche ist vorteilhafterweise größer als die Dicke eines den behälterwandseitigen Teil des Schwenklagers bildenden Schwenkarms, so dass einseitig oder beidseitig des Schwenkarms ein schmaler Spalt zum Bolzenkopf und/oder zu dem Trägerkörper hin verbleibt, wodurch eine besonders reibungsarme Lagerung der Behälterwand in der Schwenkgelenkanordnung erzielt wird und der Bolzen lagestabil an dem Trägerkörper gehalten ist. Das Übermaß der axialen Länge der Lagerfläche gegen die axiale Dicke des Schwenkarms in axialer Richtung beträgt vorteilhafterweise wenigstens 4 %, insbesondere wenigstens 7,5 % bzw. höchstens 20 %, insbesondere höchstens 15 % der axialen Länge der Lagerfläche.

Die Ausführung der Schwenkgelenkanordnung mit dem auf Rahmenseite und Behälterwandseite einschaligen Lager mit einem Bundbolzen ist auch unabhängig von der Verstellbarkeit der Schwenkachsenposition mittels eines justierbaren Trägerkörpers von besonderem Vorteil und kann insbesondere auch bei feststehender Schwenkachse sowie ohne Zwischenfügung eines Trägerkörpers mit Befestigung des Bundbolzens direkt am Behälterrahmen vorteilhaft realisierbar sein. Eine solche Lagerausführung wird zum einen der hohen Stabilitätsanforderung für die pendelnde Lagerung der schweren Heckklappe gerecht und bietet zugleich eine einfache Montage und Demontage der Heckklappe am Rahmen mit in axialer Richtung geringer Bautiefe. Gegenüber den gebräuchlichen zweischnittigen Pendellagern für Heckklappen von Kippmulden mit einer Lagergabel auf Seiten der Heckklappe oder des Rahmens ist das einschnittige Lager mit dem Bundbolzen einfacher aufgebaut und damit kostengünstiger und bei der Oberflächenbehandlung für Korrosionsschutz und/oder Lackierung zuverlässiger allseitig zugänglich.

Die Anlagefläche des wenigstens einen ersten Stellglieds, vorzugsweise auch die des zweiten Stellglieds, ist vorteilhafterweise als Umfangsfläche entlang des Randes einer Scheibe ausgeführt. Die Scheibe ist in bevorzugter Ausführung eine zur Drehachse des Stellglieds exzentrische Kreisscheibe. Vorzugsweise liegt die Scheibe in einer Aussparung des Trägerkörpers ein. Die Aussparung kann gemäß einer vorteilhaften Ausführungsform eine ovale Form aufweisen. Eine Innenwandfläche der Aussparung bildet die Gegenanlagefläche zu der Anlagefläche des Stellglieds.

Die axiale Verspannung des Bolzens gegen den Trägerkörper ist vorzugsweise zugleich zur Verspannung des Trägerkörpers gegen den Behälterrahmen eingesetzt. Durch die sowohl den Trägerkörper als auch eine Platte des Behälterrahmens durchgreifende Bolzenlänge ergibt sich eine hohe Abstützung gegen eine Verkippung des Bolzens. Die Ausführung der Schwenklageranordnung mit der Lagerfläche an einem freien Ende eines Lagerbolzens und die Verspannung des Lagerbolzens gegen den Behälterrahmen über eine Stufe bzw. einen Bund des Lagerbolzens sind Maßnahmen, welche auch unabhängig von der Ausführung der Justiereinrichtungen von besonderem Vorteil sind.

Die Erfindung ist nachfolgend anhand eines bevorzugten Ausführungsbeispiels unter Bezugnahme auf die Abbildungen noch eingehend veranschaulicht. Dabei zeigt:
- Fig. 1: eine Schrägansicht einer Schwenkgelenkanordnung,
- Fig. 2: eine Ansicht der Schwenkgelenkanordnung mit Blick in Richtung der Schwenkachse in einer ersten Stellung,
- Fig. 3: die Anordnung nach Fig. 2 in einer zweiten Stellung,
- Fig. 4: die Anordnung nach Fig. 2 in einer dritten Stellung,
- Fig. 5: einen Schnitt durch Fig. 2 entlang A - A,
- Fig. 6: einen Schnitt durch Fig. 2 entlang B-B,
- Fig. 7: eine vereinfachte Ausführung einer Trägerplatte,
- Fig. 8: eine bevorzugte Lageranordnung an einem feststehenden Trägerkörper.

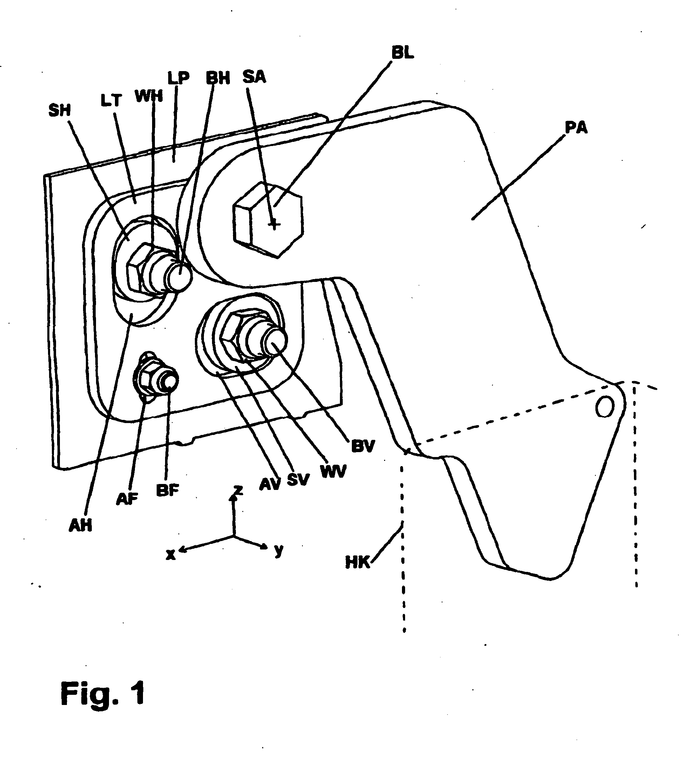

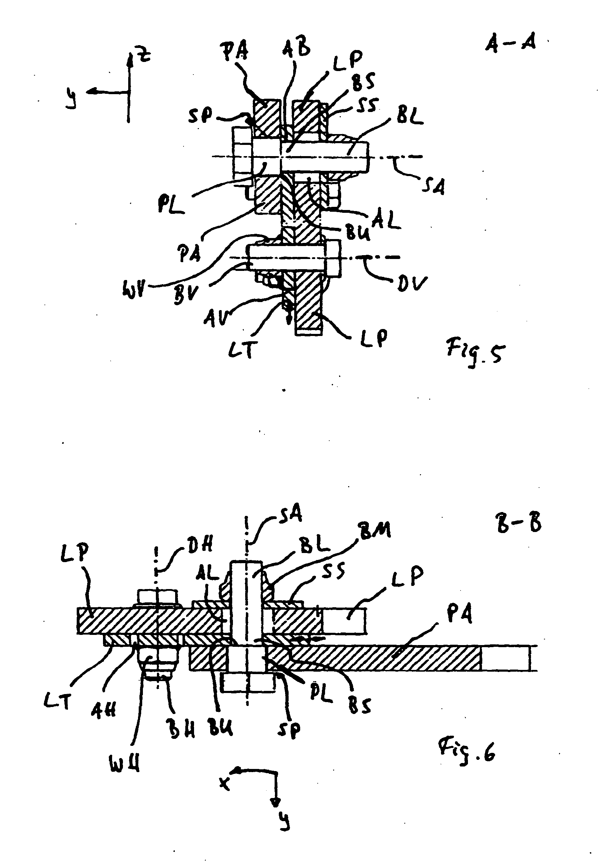

In Fig. 1 ist in Schrägdarstellung ein Ausschnitt aus einer erfindungsgemäßen Fahrzeugbehälteranordnung gezeigt, welcher Details einer Schwenkgelenkanordnung darstellt. Weitere Details sind insbesondere auch aus den Schnittdarstellungen nach Fig. 5 und Fig. 6 ersichtlich.

Stellvertretend für den Behälterrahmen sei ein Ausschnitt aus einer Lagerplatte LP dargestellt, welche Bestandteil des Behälterrahmens oder fest mit diesem verbunden, insbesondere verschweißt ist. Der Fahrzeugbehälter kann insbesondere eine nach oben offene Kippmulde sein, welche am Heck eine an ihrer oberen Kante pendelnd aufgehängte Heckklappe aufweist. Die Heckklappe verschließt im abgesenkten Zustand der Kippmulde die hintere Ausfallöffnung der Kippmulde. Die Heckklappe kann in der geschlossenen Stellung verriegelbar sein. Die Kippmulde kann in gebräuchlicher Weise um eine im Heckbereich der Kippmulde unten angeordnete Kippachse durch Anheben des Frontbereichs kippbar sein, um in der Kippmulde transportiertes Schüttgut über die heckseitige Öffnung auszugeben. Die entriegelte Heckklappe gibt aufgrund der pendelnden Aufhängung in einem Schwenklager an der Oberseite der Heckklappe die Öffnung beim Anheben des Frontbereichs der Kippmulde frei, so dass das Schüttgut nach hinten ausfallen kann.

Von der Heckklappe einer solchen Kippmulde als pendelnd eingehängte Behälterwand ist in Fig. 1 lediglich ein sich von der flächigen Heckklappe zu der Schwenkgelenkanordnung fortsetzender Pendelarm PA ausschnittsweise gezeichnet. Der Pendelarm PA sei als fest mit der nur mit unterbrochener Linie angedeuteten Heckklappe HK verbunden, insbesondere verschweißt betrachtet.

Zwischen der fest mit dem Behälterrahmen verbundenen Lagerplatte LP und dem fest mit der Heckklappe verbundenen Pendelarm PA ist ein Trägerkörper LT eingefügt, welcher den rahmenseitigen Teil eines Pendellagers, im skizzierten Beispiel in Form eines Lagerbolzens BL mit einer kreiszylindrischen Lagerfläche PL trägt. Der auf Seiten des Pendelarms PA ausgebildete Teil des Pendellagers ist vorzugsweise durch eine bezüglich des Pendelarms PA ortsfeste kreisförmige, eine kreiszylindrische Lagerfläche des Lagerbolzens umgebende Lageraussparung in dem Pendelarm gegeben.

In Fig. 1 mit eingezeichnet ist ein x-y-z-Koordinatensystem, wobei die y-Richtung parallel zur Schwenkachse SA des Pendellagers, die x-Achse senkrecht zu dieser Schwenkachse horizontal und die z-Achse senkrecht zur Schwenkachse vertikal verlaufe.

Der Lagerbolzen BL ist quer zur Schwenkachse, d. h. in einer x-z-Ebene, relativ zu der als feststehend angesehenen Lagerplatte LP verstellbar an dieser gehalten. Mit der Verstellung des Trägerkörpers LT quer zur Schwenkachse wird der in dem Trägerkörper LT in fester Position gehaltene Lagerbozen BL mit verschoben, so dass sich bei einer Verstellung der Position des Trägerkörpers LT die Position der Schwenkachse in der x-z-Ebene verändert. Die Ausrichtung der Schwenkachse parallel zur y-Richtung bleibt dabei erhalten.

Der Lagerbolzen ist an dem dem Trägerkörper axial abgewandten Ende der Lagerfläche durch den Bolzenkopf, welcher wiederum einen größeren Durchmesser besitzt als die Lagerfläche, abgeschlossen. Am Bolzenkopf ist vorteilhafterweise ein Werkzeugansatz, beispielsweise eine Außen-Sechskant-Form ausgebildet. Die axiale Länge der Lagerfläche ist geringfügig größer als die axiale Dicke des Pendelarms PA, so dass der Pendelarm mit axialem Spiel auf der Lagerfläche reibungsarm gelagert ist. Der axiale Spalt SP beträgt vorteilhafterweise zwischen 4 % und 20 % der Dicke des Pendelarms. Der Lagerbolzen ist z. B. über eine auf ein Bolzengewinde aufgeschraubte Mutter BM mit der Stufe zwischen Bolzenschaft BS und Lagerfläche gegen den Trägerkörper fest verspannbar und dadurch lagestabil gehalten.

Der Trägerkörper LT besteht vorzugsweise aus einer ebenen metallischen Platte und liegt flächig an einer ebenen Fläche der Lagerplatte LP an. In dem Trägerkörper sind eine erste Aussparung AH und eine zweite Aussparung AV gegeben, welche von der Aussparung AB zur Aufnahme des Lagerbolzens BL beabstandet sind. Vorzugsweise ist eine erste Aussparung AH im Trägerkörper LT überwiegend horizontal, eine zweite Aussparung AV überwiegend vertikal von der Aussparung AB für den Lagerbolzen BL beabstandet angeordnet.

Die Gelenkanordnung ist vorteilhafterweise sowohl auf Rahmenseite mit dem plattenförmigen Trägerkörper LT als auch auf Seiten der Behälterwand mit dem Pendelarm PA jeweils einschalig, insbesondere als Platte oder Plattenabschnitt ausgeführt. Hieraus ergibt sich eine vorteilhaft einfache Bauweise mit geringer axialer Bautiefe.

In den Aussparungen AH bzw. AV ist jeweils ein Stellglied SH bzw. SV eingesetzt. Die Stellglieder enthalten kreisförmige Scheiben, welche um Drehachsen DH bzw. DV von Schraubbolzen BH bzw. BV verdrehbar und in beliebiger Drehposition durch Festziehen der Schraubbolzen gegen die Lagerplatte LP verspannbar und dadurch in der jeweiligen Drehposition festlegbar sind. Die Kreisscheiben sind dabei exzentrisch zu den Drehachsen DH bzw. DV angeordnet. Zur Verdrehung der Kreisscheiben weisen diese vorteilhafterweise einen nicht drehsymmetrischen Werkzeugansatz auf. In der skizzierten bevorzugten Ausführung ist hierbei jeweils eine Schraubenmutter fest mit den Kreisscheiben verbunden, insbesondere verschweißt, welche vorteilhafterweise zum einen als Werkzeugansatz zur Verdrehung der Scheiben um die Bolzen in beliebige Drehpositionen und zum anderen zugleich zur Festlegung der Scheiben in gewählten Drehpositionen durch Anziehen der Schraubbolzen BH bzw. BV dient.

Die bezüglich der Drehachsen DH bzw. DV exzentrisch gelagerten Scheiben bilden mit ihren äußeren Umfangsflächen Anlageflächen für innere Wandflächen der Aussparungen AH bzw. AV des Trägerkörpers LT, über welche der Trägerkörper dadurch gegen den Behälterrahmen bzw. die mit diesem fest verbundene Lagerplatte LP in der x-z-Ebene abgestützt ist. Nach Einstellung einer optimalen Position der Schwenkachse SA durch Verschieben des Trägerkörpers LT mittels Verdrehen der beiden Stellglieder SH, SV wird der Trägerkörper in der gewählten Position relativ zur Lagerplatte LP bzw. dem Behälterrahmen festgelegt. Hierfür dient in dem skizzierten bevorzugten Beispiel der Lagerbolzen BL, welcher auf der dem Pendelarm abgewandten Seite durch den Trägerkörper LT hindurch bis zum Behälterrahmen bzw. der Lagerplatte LP reicht und ein Gewinde aufweist, mittels dessen der in der Aussparung AB des Trägerkörpers einliegende Lagerbozen fest gegen die Lagerplatte verspannt wird. In der Lagerplatte ist hierfür eine gegenüber der Querabmessung des Bolzenschafts des Lagerbolzens BL vergrößerte Aussparung AL vorgesehen, innerhalb derer der Lagerbolzen zur Einstellung der optimalen Schwenkachsposition verstellbar ist. Auf der dem Trägerkörper LT abgewandten Seite der Lagerplatte ist eine Stützscheibe SS für die Schraubverspannung des Lagerbolzens gegen die Lagerplatte und den Trägerkörper eingefügt. Die Festlegung des Trägerkörpers LT relativ zur Trägerplatte LP kann auch durch andere Befestigungsmittel oder durch Modifizierung der Stellglieder erfolgen. Die Festlegung über den Lagerbolzen ist wegen der geringen Anzahl von Bauelementen besonders vorteilhaft. In dem festgelegten Zustand des Trägerkörpers LT wird dieser senkrecht zur Trägerplatte LP primär durch den verspannten Lagerbolzen BL gehalten und quer zur Schwenkachse SA durch die für sich kraftschlüssig an der Lagerplatte LP in bestimmter Drehposition festgelegten Stellglieder SH und SV gegen die Lagerplatte abgestützt.

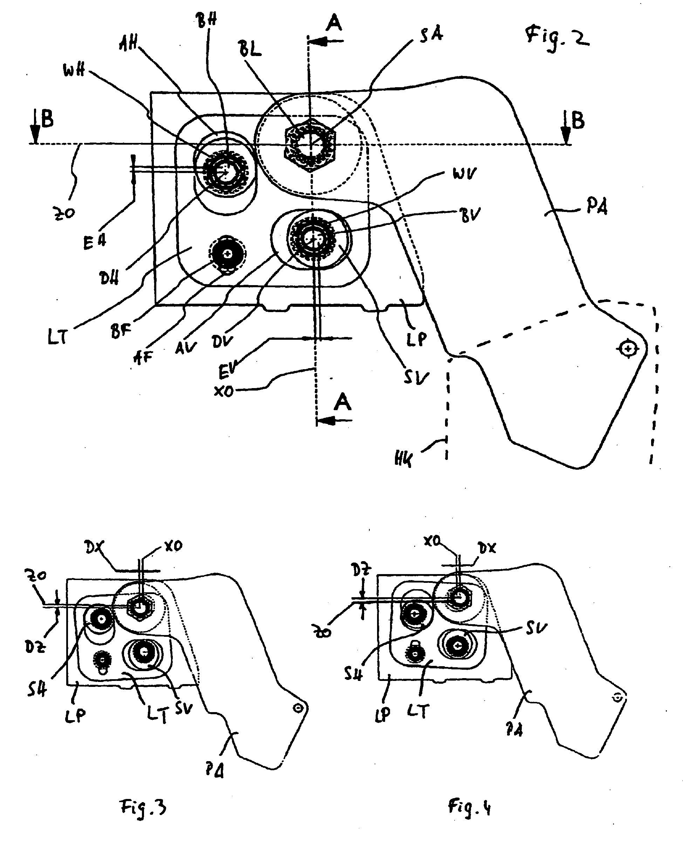

Die Aussparungen AH bzw. AV in dem Trägerkörper sind in der skizzierten bevorzugten Ausführungsform jeweils oval ausgeführt, so dass die kreisrunden Scheiben der Stellglieder SH bzw. SV entlang der großen Ovalachse verschiebbar und durch Bemessung der kurzen Ovalachse mit geringem Spiel in den ovalen Aussparungen geführt sind. Die lange Ovalachse der Aussparung AH ist dabei in einer in Fig. 4 skizzierten Mittelstellung des Trägerkörpers LT im wesentlichen vertikal ausgerichtet, die lange Ovalachse der Aussparung AV im wesentlichen horizontal.

Die Trägerkörper LT und damit auch der in diesem in definierter Position verbundene Lagerbolzen ist vorteilhaft in jeder Einstellposition relativ zu der Lagerplatte LP in der Verstellebene durch die exzentrischen Scheiben der Stellfeder formschlüssig abgestützt.

Vorteilhafterweise ist das in der Aussparung AH geführte Stellglied SH überwiegend horizontal von dem Lagerbozen BL beabstandet, das in der Aussparung AV geführte Stellglied SV im wesentlichen vertikal von dem Lagerbolzen BL beabstandet. Hierdurch bewirkt vorteilhafterweise eine Drehung des Stellglieds SH um die Drehachse DH im wesentlichen eine horizontale Verschiebung der Position der Schwenkachse SA, eine Drehung des Stellglieds SV um die Drehachse DV hingegen eine im wesentlichen vertikale Verschiebung der Position der Schwenkachse SA. Dies begünstigt eine für den Benutzer einfache intuitive und damit schnelle Einstellung der optimalen Position der Schwenkachse.

In Fig. 2 ist der Trägerkörper LT in einer bezüglich des horizontalen und vertikalen Verstellbereichs der Schwenkachsenposition in einer mittleren Position gezeigt, bei welcher sich die beiden Stellglieder SH bzw. SV jeweils in einer mittleren Drehposition befinden. Die skizzierten Drehpositionen sind äquivalent zu einer jeweils um 180° verdrehten Positionen der beiden Stellglieder. Die Exzenterabstände der Mittelpunkte der Kreisscheiben der Stellglieder SH und SV von den jeweiligen Drehachsen DH bzw. DV sind mit EH bzw. EV bezeichnet. EH und EV liegen typischerweise in einem Bereich von 2 mm bis 10 mm. Da durch die ovale Gestaltung beider Aussparungen bei festgelegten Stellgliedern die Position des Längsträgers noch nicht eindeutig ist, ist ein weiteres Führungsglied in Form eines bezüglich der Lagerplatte LP feststehenden Führungsbolzens BF, welcher in einem Längsloch AF als weiterer Aussparung des Trägerkörpers geführt ist, vorgesehen. Mit dieser zusätzlichen Linearführung ist jeweils einer Kombination von Stellungen der beiden Stellglieder SH, SV eine eindeutige Position der Schwenkachse zugeordnet. Die Position der Schwenkachse in dieser Mittelstellung der Stellglieder ist mit den Koordinaten XO und ZO bezeichnet.

In Fig. 2 ist mit unterbrochener Linie eine flächige Heckklappe HK als Behälterwand angedeutet. Die Schwenkachse SA ist vorteilhafterweise von der Oberkante OK der Behälterwand horizontal und/oder vertikal von der Heckklappe weg beabstandet angeordnet. Der Schwenkarm ist vorteilhafterweise plattenförmig, insbesondere aus einem ebenen Plattenzuschnitt herstellbar ausgeführt.

Die Schwenkachse SA ist vorteilhafterweise über den Pendelarm PA von der Wandfläche der Heckklappe HK, welche mit unterbrochener Linie angedeutet ist, in horizontaler und/oder vertikaler Richtung beabstandet.

In Fig. 3 ist eine gegenüber der Fig. 2 veränderte Position des Trägerkörpers LT und damit der Schwenkachse SA dargestellt. Hierbei ist das Stellglied SH gegenüber Fig. 2 um 90° entgegen dem Uhrzeigersinn verdreht, wodurch im wesentlichen die horizontale Verschiebung DX der Schwenkachse SA nach links aus der Mittelposition nach Fig. 2 bewirkt wird. Die gleichfalls vorgenommene Verdrehung des Stellglieds SV um 90° im Uhrzeigersinn in die in Fig. 3 skizzierte Drehposition bewirkt im wesentlichen die vertikale Verschiebung Z der Schwenkachsenposition gegenüber der Mittelposition nach Fig. 2 nach unten. Die Beeinflussung der vertikalen Position der Schwenkachse durch eine Verdrehung des Stellgliedes SH sowie die Beeinflussung der horizontalen Position der Schwenkachse bei Verdrehen des Stellgliedes SH sind demgegenüber vernachlässigbar, so dass DX ungefähr gleich EH und DZ ungefähr gleich EV ist.

In Fig. 4 ist eine Position des Trägerkörpers LT skizziert, in welcher durch Verdrehen des Stellgliedes SH um 90° im Uhrzeigersinn gegenüber der Mittelposition nach Fig. 2 die Position der Schwenkachse horizontal um DX nach rechts verschoben ist. Durch Verdrehen des Stellgliedes SV um 90° entgegen den Uhrzeigersinn im Vergleich zur Mittenposition nach Fig. 2 ist eine Verschiebung der Position der Schwenkachse in vertikaler Richtung um DZ nach oben bewirkt. Die Horizontalverschiebungen DX nach Fig. 3 bzw. Fig. 4 sowie die Vertikalverschiebungen DZ stellen im wesentlichen die maximal möglichen Verschiebungswege in x-Richtung bzw. z-Richtung dar. Alle möglichen Zwischenpositionen für die Position der Schwenkachse SA liegen im wesentlichen innerhalb eines Rechtecks mit Seitenlängen 2DX und 2DZ um die Mittelposition nach Fig. 2.

In anderer Ausführung kann eine der beiden Aussparungen AH oder AV auch in Anpassung an die Kreisscheibe SH bzw. SV kreisrund gewählt sein. In diesem Fall entfällt die Linearführung durch den Führungsbolzen BF in einer Aussparung AF. Soweit benötigt, kann an dessen Stelle eine Verspannung des Trägerkörpers LT gegen die Lagerplatte ohne Linearführungseigenschaften vorgesehen sein.

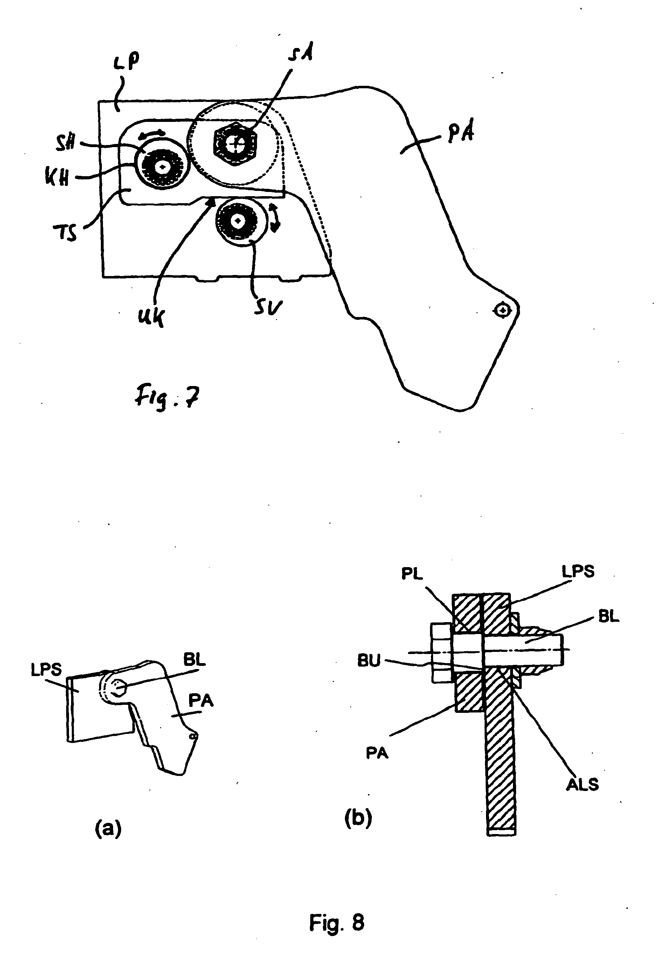

In Fig. 7 ist eine Ausführungsform mit einem plattenförmigen Trägerkörper TS skizziert, bei welchem die ovale Aussparung AH nach den vorangegangenen Skizzen ersetzt ist durch eine der kreisrunden Scheibe des Stellglieds im Durchmesser angepasste kreisförmige Aussparung KH ersetzt ist und anstelle der ovalen Aussparung AV der vorangegangenen Skizzen nur eine Unterkante UK des Trägerkörpers TS als Gegenanlagefläche zu der Umfangsfläche des drehbaren Stellglieds SV vorhanden ist. Bei pendelnder Lagerung tritt eine den plattenförmigen Trägerkörper von der Anlagefläche des Stellglieds SV nach oben abhebende Kraft während einer Justierphase nicht auf, so dass das Wegfallen der unteren Führungsfläche unproblematisch ist.

Der Trägerkörper LT bzw. TS ist vorteilhafterweise durch eine ebene metallische Platte gebildet und kann dadurch günstigerweise in identischer Form auf beiden in Längsrichtung der Behälterwand an entgegen gesetzten Enden angeordneten Gelenkanordnungen eingesetzt werden. Gleiches gilt für die Lagerplatte LP in ebener Ausführung.

Fig. 8 zeigt in Schrägansicht (a) und als Schnittbild (b) (entsprechend Fig. 1 und Fig. 5 für das einstellbare Pendellager) eine vorteilhafte Gelenkanordnung mit fest positionierter, nicht einstellbarer Schwenkachse, wobei wiederum der besonders vorteilhafte Aufbau gegeben ist, der auf Rahmenseite mit einer Lagerplatte LPS, hier ohne zusätzlichen verstellbaren Trägerkörper, und auf Seiten der Behälterwand mit dem Pendelarm PA jeweils eine einschalige (einschnittige) Lagerausführung aufweist. Der Lagerbolzen ist wieder als Bundbolzen ausgeführt, welcher mit einer Schulter gegen eine Aussparung in der Lagerplatte axial abgestützt ist.

Durch die Verwendung des Bundbolzens BL zur Bildung der Lagerfläche PL des Pendellagers mit dem radial erweiterten Schaftteil zwischen dem Bund und dem Bolzenkopf ergibt sich eine durch die Einfachheit besonders vorteilhafte Aufführungsform eines nicht einstellbaren Pendellagers. Der bezüglich des Bundes BU dem Gewindeende des Bolzens zugewandte Schaftteil ist mit geringem Spiel in einer Aussparung ALS der feststehenden Lagerplatte LPS gehalten und mit dem Bund BU über die Mutter BM und eine zwischengefügte Scheibe axial fest gegen die Lagerplatte LPS verspannt. Der Pendelarm PL ist mit axialem Spiel und dadurch reibungsarm auf dem radial größeren Abschnitt des Bolzenschafts gelagert.

Das einschnittige Lager mit dem durch Verschrauben gegen die Lagerplatte verspannten Bundbolzen ist mit wenigen Standard-Bauteilen einfach und kostengünstig aufgebaut gegenüber gebräuchlichen zweischnittigen Lagern oder Lagern mit speziellen Lagerkörpern oder Verschlusskörpern. Das Lager ist einfach in Montage und Demontage und gewährleistet bei der Oberflächenbehandlung für Korrosionsschutz und/oder Lackierung, dass alle Oberflächenbereiche zuverlässig erfasst werden. Trotz des einfachen und vorteilhaften Aufbaus weist das Lager die für die pendelnde Lagerung der schweren Heckklappe erforderliche hohe Stabilität auf.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können die Stellglieder quer zur Schwenkachse SA in fester Position an dem Trägerkörper LT angeordnet und mit ihren Anlageflächen an Gegenanlageflächen der Lagerplatte bzw. des Behälterrahmens abgestützt sein und hierdurch bei Verdrehung um die Drehachsen eine Verschiebung des Trägerkörpers bewirken. Die Stellglieder können gleichzeitig auch zur Festlegung des Trägerkörpers in Richtung der Schwenkachse an der Lagerplatte dienen.

## Patentansprüche

1. Fahrzeugbehälteranordnung mit einer um eine horizontale Schwenkachse (SA) an einem Behälterrahmen (LP) pendelnd gehaltenen Behälterwand (PA, HK), welche in einer Schließstellung eine Behälteröffnung verschließt, insbesondere Kippmulde mit einer pendelnd aufgehängten Heckklappe, wobei Behälterwand (PA, HK) und Behälterrahmen (LP) über eine Schwenkgelenkanordnung verbunden sind, welche einen an dem Behälterrahmen befestigten Trägerkörper (LT) mit einem rahmenseitigen Gelenkteil und Justiereinrichtungen zur Einstellung der Position des Trägerkörpers quer zur Schwenkachse (SA) für eine genaue Ausrichtung der Behälterwand bezüglich der Behälteröffnung in der Schließstellung enthält, **dadurch gekennzeichnet, dass** die Justiereinrichtungen wenigstens ein um eine erste Drehachse (DH, DV) drehbares erstes Stellglied (SH, SV) mit einer zur ersten Drehachse exzentrisch verlaufenden Anlagefläche, über welche der Trägerkörper (LT) gegen den Behälterrahmen abgestützt ist, sowie ein um eine zweite Drehachse (DV, DH) drehbares zweites Stellglied (SV, SH) mit einer zur zweiten Drehachse exzentrisch verlaufenden zweiten Anlagefläche, über welche der Trägerkörper gegen den Behälterrahmen abgestützt ist, enthalten.

2. Anordnung nach Anspruch 1, **dadurch gekennzeichnet, dass** die erste und/oder die zweite Drehachse (DH, DV) parallel zur Schwenkachse (SA) verläuft.

3. Anordnung nach Anspruch 1 oder 2, **dadurch gekennzeichnet, dass** die Drehachsen (DH, DV) des ersten und des zweiten Stellglied (SH, SV) bezüglich der Schwenkachse (SA) um annähernd 90°, insbesondere zwischen 70° und 110° gegeneinander versetzt angeordnet sind.

4. Anordnung nach einem der Ansprüche 1 bis 3, **dadurch gekennzeichnet, dass** die Justiereinrichtungen bei eingehängter und in Schließstellung befindlicher Behälterwand betätigbar sind.

5. Anordnung nach einem der Ansprüche 1 bis 4, **dadurch gekennzeichnet, dass** die erste und/oder die zweite Anlagefläche durch Außenflächen einer Kreisscheibe (SH, SV) gebildet ist.

6. Anordnung nach Anspruch 5, **dadurch gekennzeichnet, dass** die Kreisscheibe in einer Aussparung (AH, AV) des Trägerkörpers (LT) einliegt.

7. Anordnung nach Anspruch 6, **dadurch gekennzeichnet, dass** die Aussparung (AH, AV) oval ist.

8. Anordnung nach einem der Ansprüche 1 bis 7, **dadurch gekennzeichnet, dass** mit dem Trägerkörper ein Lagerbolzen (BL) der Schwenkgelenkanordnung verbunden ist.

9. Anordnung nach Anspruch 8, **dadurch gekennzeichnet, dass** der Lagerbolzen (BL) mit einem freien Ende über den Trägerkörper hinaus steht und die Lagerfläche (PL) des Schwenklagers im Bereich des freien Endes angeordnet ist.

10. Anordnung nach Anspruch 8 oder 9, **dadurch gekennzeichnet, dass** der Lagerbolzen (BL) zur Verschraubung des Trägerkörpers mit dem Behälterrahmen dient.

11. Anordnung nach Anspruch 10, **dadurch gekennzeichnet, dass** die axiale Länge der Lagerfläche (PL) größer ist als die Dicke eines den behälterwandseitigen Teil der Schwenkgelenkanordnung bildenden Schwenkarms (PA).

12. Anordnung nach einem der Ansprüche 8 bis 11, **dadurch gekennzeichnet, dass** der Lagerbolzen (BL) ein Bundbolzen ist.

13. Anordnung nach einem der Ansprüche 8 bis 12, **dadurch gekennzeichnet, dass** der Schaft des Lagerbolzens (BL) gestuft verläuft.

14. Anordnung nach einem der Ansprüche 1 bis 13, **dadurch gekennzeichnet, dass** der Trägerkörper (LT) durch eine einstückige Platte gebildet ist.

15. Anordnung nach Anspruch 14, **dadurch gekennzeichnet, dass** die Platte (LT) im wesentlichen eben ist.

## Claims

1. Vehicle container arrangement with a container wall (PA, HK) which is held on a container frame (LP) in a manner such that it swings about a horizontal pivot axis (SA) and, in a closed position, closes a container opening, in particular a dumping body with a tailboard suspended in a swinging manner, wherein the container wall (PA, HK) and container frame (LP) are connected via a pivoting hinge arrangement which contains a support body (LT), which is fastened to the container frame and has a frame-side hinge part, and adjusting devices for setting the position of the support body transversely with respect to the pivot axis (SA) in order to precisely align the container wall with respect to the container opening in the closed position, **characterized in that** the adjusting devices contain at least one first actuating element (SH, SV) which is rotatable about a first axis of rotation (DH, DV) and has a bearing surface which runs eccentrically with respect to the first axis of rotation and via which the support body (LT) is supported against the container frame, and a second actuating element (SV, SH) which is rotatable about a second axis of rotation (DV, DH) and has a second bearing surface which runs eccentrically with respect to the second axis of rotation and via which the support body is supported against the container frame.

2. Arrangement according to Claim 1, **characterized in that** the first and/or the second axis of rotation (DH, DV) run/runs parallel to the pivot axis (SA).

3. Arrangement according to Claim 1 or 2, **characterized in that** the axes of rotation (DH, DV) of the first and second actuating element (SH, SV) are offset in relation to each other by approximately 90°, in particular between 70° and 100°, with respect to the pivot axis (SA).

4. Arrangement according to one of Claims 1 to 3, **characterized in that** the adjusting devices are actuable when the container wall is suspended and is in the closed position.

5. Arrangement according to one of Claims 1 to 4, **characterized in that** the first and/or the second bearing surface are/is formed by outer surfaces of a circular disc (SH, SV).

6. Arrangement according to Claim 5, **characterized in that** the circular disc lies in a cutout (AH, AV) in the support body (LT).

7. Arrangement according to Claim 6, **characterized in that** the cutout (AH, AV) is oval.

8. Arrangement according to one of Claims 1 to 7, **characterized in that** a bearing pin (BL) of the pivoting hinge arrangement is connected to the support body.

9. Arrangement according to Claim 8, **characterized in that** the bearing pin (BL) protrudes with a free end beyond the support body, and the bearing surface (PL) of the pivot bearing is arranged in the region of the free end.

10. Arrangement according to Claim 8 or 9, **characterized in that** the bearing pin (BL) serves to screw the support body to the container frame.

11. Arrangement according to Claim 10, **characterized in that** the axial length of the bearing surface (PL) is greater than the thickness of a pivoting arm (PA) which forms the container-wall-side part of the pivoting hinge arrangement.

12. Arrangement according to one of Claims 8 to 11, **characterized in that** the bearing pin (BL) is a collared pin.

13. Arrangement according to one of Claims 8 to 12, **characterized in that** the shank of the bearing pin (BL) has a stepped profile.

14. Arrangement according to one of Claims 1 to 13, **characterized in that** the support body (LT) is formed by a single-piece plate.

15. Arrangement according to Claim 14, **characterized in that** the plate (LT) is substantially flat.

## Revendications

1. Ensemble réservoir de véhicule pourvu d'une paroi de réservoir (PA, HK) maintenue de façon pendulaire autour d'un axe de pivotement horizontal (SA) au niveau d'un châssis de réservoir (LP), ladite paroi fermant une ouverture de réservoir en position fermée, notamment benne basculante pourvue d'un clapet arrière accroché de façon pendulaire, la paroi de réservoir (PA, HK) et le châssis de réservoir (LP) étant reliés entre eux via un ensemble d'articulation pivotante qui contient un corps porteur (LT) fixé au châssis de réservoir au niveau d'une partie d'articulation située côté châssis et des dispositifs de réglage pour le réglage de la position du corps porteur perpendiculairement à l'axe de pivotement (SA) pour un alignement précis de la paroi du réservoir par rapport à l'ouverture de réservoir en position fermée, **caractérisé en ce que** les dispositifs de réglage comprennent au moins un premier élément d'ajustage (SH, SV) tournant autour d'un premier axe de rotation (DH, DV) avec une surface d'appui s'étendant de façon excentrée par rapport au premier axe de rotation et au-dessus de laquelle le corps porteur (LT) est appuyé contre le châssis de réservoir, ainsi qu'un deuxième élément d'ajustage (SV, SH) tournant autour d'un deuxième axe de rotation (DV, DH) avec une deuxième surface d'appui s'étendant de façon excentrée par rapport au deuxième axe de rotation et au-dessus de laquelle le corps porteur est appuyé contre le châssis de réservoir.

2. Ensemble selon la revendication 1, **caractérisé en ce que** le premier et/ou le deuxième axe de rotation (DH, DV) s'étendent parallèlement à l'axe de pivotement (SA).

3. Ensemble selon la revendication 1 ou 2, **caractérisé en ce que** les axes de rotation (DH, DV) du premier et du deuxième élément d'ajustage (SH, SV) sont disposés de façon décalée les uns par rapport aux autres d'environ 90°, notamment entre 70° et 110°, par rapport à l'axe de pivotement (SA).

4. Ensemble selon l'une quelconque des revendications 1 à 3, **caractérisé en ce que** les dispositifs d'ajustage peuvent être actionnés au niveau d'une paroi de réservoir accrochée se trouvant en position fermée.

5. Ensemble selon l'une quelconque des revendications 1 à 4, **caractérisé en ce que** la première et/ou la deuxième surface d'appui est formée par les surfaces extérieures d'un disque circulaire (SH, SV).

6. Ensemble selon la revendication 5, **caractérisé en ce que** le disque circulaire repose dans un évidement (AH, AV) du corps porteur (LT).

7. Ensemble selon la revendication 6, **caractérisé en ce que** l'évidement (AH, AV) est ovale.

8. Ensemble selon l'une quelconque des revendications 1 à 7, **caractérisé en ce qu'**un boulon pivot (BL) de l'ensemble d'articulation pivotant est relié au corps porteur.

9. Ensemble selon la revendication 8, **caractérisé en ce que** le boulon pivot (BL) ressort avec une extrémité libre au-delà du corps porteur et **en ce que** la surface d'appui (PL) du palier pivotant est disposée dans la zone de l'extrémité libre.

10. Ensemble selon la revendication 8 ou 9, **caractérisé en ce que** le boulon pivot (BL) sert à visser le corps porteur au châssis du réservoir.

11. Ensemble selon la revendication 10, **caractérisé en ce que** la longueur axiale de la surface de palier (PL) est supérieure à l'épaisseur d'un bras pivotant (PA) formant la partie située côté paroi de réservoir de la partie de l'ensemble d'articulation pivotante.

12. Ensemble selon l'une quelconque des revendications 8 à 11, **caractérisé en ce que** le boulon pivot (BL) est un boulon à collet.

13. Ensemble selon l'une quelconque des revendications 8 à 12, **caractérisé en ce que** la tige du boulon pivot (BL) s'étend de façon étagée.

14. Ensemble selon l'une quelconque des revendications 1 à 13, **caractérisé en ce que** le corps porteur (LT) est formé par une plaque réalisée d'un seul tenant.

15. Ensemble selon la revendication 14, **caractérisé en ce que** la plaque (LT) est pour l'essentiel plane.
